# EUROPEAN PATENT SPECIFICATION

(11) **EP 2 103 458 B1**
(45) Date of publication and mention of the grant of the patent: **21.09.2011**
(21) Application number: 09250752.4
(22) Date of filing: 18.03.2009
(51) Int. Cl.: B60D 1/46

(54) **A vehicle hitch**
Fahrzeugkupplung
Attelage de véhicule

(30) Priority: 18.03.2008 GB 0805064
(43) Date of publication of application: 23.09.2009
(73) Proprietor: Bill Bennett Engineering Limited, South Glos BS37 6QH (GB)
(72) Inventor: Bennett, William, South Gloucestershire BS37 6QH (GB); Groves, Anthony, South Gloucestershire BS37 6QH (GB); Butt, Andrew, South Gloucestershire BS37 6QH (GB)
(74) Representative: Forrester, Simon Joseph

(56) References cited:
- EP-A- 0 728 600
- AU-B2- 446 361
- FR-A- 2 749 803
- US-A- 1 902 212
- US-A- 2 269 023

## Description

The present invention relates to a vehicle hitch, in particular a pick-up hitch for a vehicle such as, for example, an agricultural or construction vehicle.

It is common to provide certain vehicles, notably large agricultural or construction vehicles, with a hitch for hitching and towing 'trailers', including *inter alia* trailed plant or agricultural equipment and the like.

One form of vehicle hitch is the so-called pick-up hitch, which incorporates a moveable draw bar having a pin hitch or hook at one end for engaging the towing eye on a trailer. Typically, the draw bar is locked in a raised position to provide a desired ground clearance until such time as it is required to perform a hitching operation, at which point the draw bar can be 'dropped' down into a hitching position and subsequently raised to engage and 'pick up' the towing eye of the trailer.

The draw bar on pick-up hitches tends to be too heavy for safe manoeuvring by hand, and so pick-up hitches generally incorporate a drive arrangement for moving the draw bar between the raised position and the hitching position. In a typical arrangement, the draw bar is hydraulically actuated, either by a dedicated hydraulic ram or by hydraulic "drop arms" (the latter being provided as standard on the rear of many agricultural vehicles) and the path of motion of the draw bar is predetermined by a series of pivoting linkages which pivotally connect the draw bar to a mounting frame on the vehicle and operably link the draw bar to the hydraulic ram.

One such vehicle hitch is described in GB2380720, which utilises a quadrilateral pivoting linkage to operably link a dedicated hydraulic ram to a corresponding moveable draw bar. The geometry of the quadrilateral linkage determines the path of movement of the draw bar.

AU446361 discloses a hitch in which a hydraulically actuated piston rod is pivotally connected to a pick-up arm having a hook. The pick-up arm is guided by a tube having a curved lower section which guides the arm outwardly and downwardly to a hitching position for hitching to a trailer.

EP0728600 discloses a coupling for tractor drawn trailers comprising a frame which is fixed to the tractor. An arm is pivoted at one end on a transverse spindle on the frame and its second free end has a coupling hook. The arm can move between a raised position near the frame and a lowered position. The arm is connected to the frame by an L shaped transmission rod. One free end of the rod is pivoted on the arm and the other free end is pivoted to the coupling. The arm pivot can translate longitudinally on the frame. The frame has a horizontal surface defining a track, parallel to the direction of drawing, along which is supported and displaced the pivoted end of the arm opposite the hook.

US1902212 discloses a vehicle hitch according to the pre-characterising part of claim 1. The towing device comprises an elongated tow bar having a curved portion and a straight portion at one end. Roller means engages the curved portion of the bar to support the bar. The straight portion extends rearwardly from the vehicle and is provided with means for coupling an axle of a vehicle with the straight portion of the bar. A winch is provided for drawing the bar over the roller means to raise the straight portion of the bar.

It is an object of the present invention to seek to provide an improved vehicle hitch.

According to the present invention there is provided a vehicle hitch comprising a mounting frame for attachment to a vehicle, a draw bar having a hitching-point towards one end, and a drive unit acting between the mounting frame and the draw bar for driving the draw bar, the mounting frame having a sliding or rolling guide arrangement for slidably or rollably supporting the draw bar on the mounting frame, the guide arrangement comprising a pair of sliding or rolling guides in the form of a support guide slidably or rollably supporting the draw bar and an opposing counterbalancing guide, characterised in that the drive unit is capable of driving the draw bar outwardly away from the vehicle into a hitching position and in that the counterbalancing guide slidably or rollably cantilevers the draw bar on the support guide and is curved along its length such that the draw bar and the hitching point are guided in a downward arc towards the ground as the draw bar is driven into said hitching position.

The support guide may be curved for guiding the draw bar and the hitching point in a downward arc towards the ground as the draw bar is driven into said hitching position. The support guide and the counterbalancing guide may be concentric, substantially arcuate guides. The draw bar may have one or more associated arcuate guide elements that slidably engage the arcuate guides.

In one embodiment, the drive unit is a linear drive device pivotally connected to the draw bar and further configured for pivotal connection to the mounting frame. The linear drive device may be directly pivotally connected to the mounting frame. The linear drive device may be double-acting for retracting the draw bar from the hitching position into a retracted position.

The draw bar may comprise a pair of parallel draw arms and the linear drive device may be aligned in-between the draw arms.

In said retracted position at least a portion of the draw bar may be housed within the mounting frame. In said retracted position, the draw bar may be substantially housed in the mounting frame.

The mounting frame may comprise a pair of mounting arms and the draw bar is retractable between the mounting arms.

The support guide and counterbalancing guide may each be defined by one or more guide slots or channels on the mounting frame, the draw bar being slidably mounted in each guide slot or channel.

One or more of the guides may comprise a load-bearing replaceable guide insert.

The load bearing insert is preferably at a point of maximum or high load-bearing where wear of the guide may be high.

Embodiments of the invention will now be described in more detail, by way of example, with reference to the accompanying drawings, in which:
FIGURE 1 is a three-quarter perspective view of a vehicle hitch;
FIGURE 2 is a cross-sectional side view, partly in phantom, illustrating the vehicle hitch of Figure 1 both in a raised position and a hitching position;
FIGURE 3a is a cross-sectional side view, partly in phantom, showing part of the vehicle hitch in Figures 1 and 2 in isolation;
FIGURE 3b is a plan view corresponding to Figure 3a;
FIGURE 4 is a cross-sectional side view, partly in phantom, showing a further part of the vehicle hitch in Figures 1 and 2 in isolation;
FIGURE 5 is a cross-sectional side view, partly in phantom, showing an alternative embodiment of a vehicle hitch;
FIGURE 6 is a cross-sectional side view, partly in phantom, showing a yet further alternative embodiment of a vehicle hitch; and
FIGURE 7 is a cross-sectional side view, partly in phantom, showing the vehicle hitch of Figure 6.

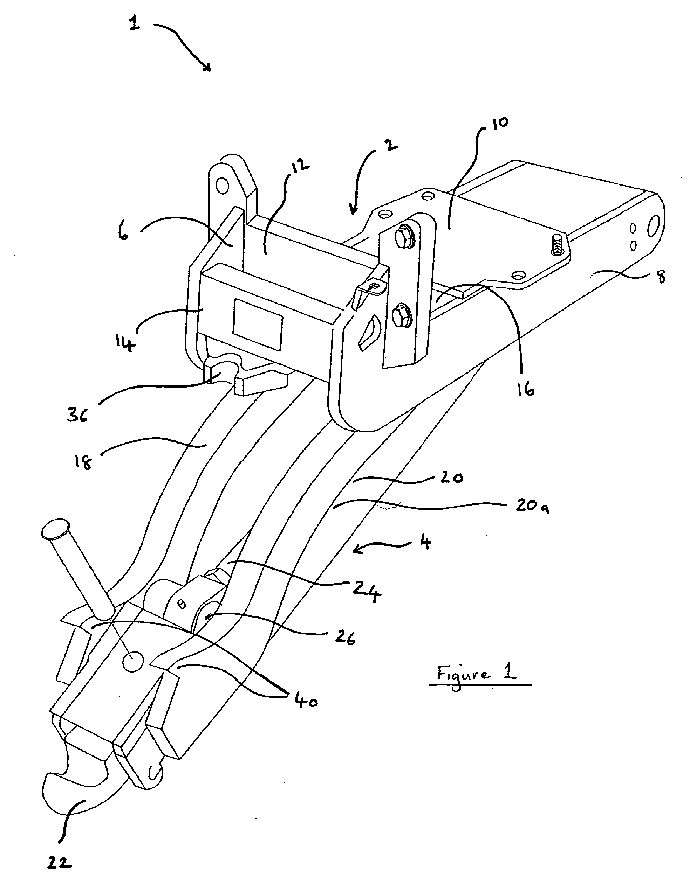

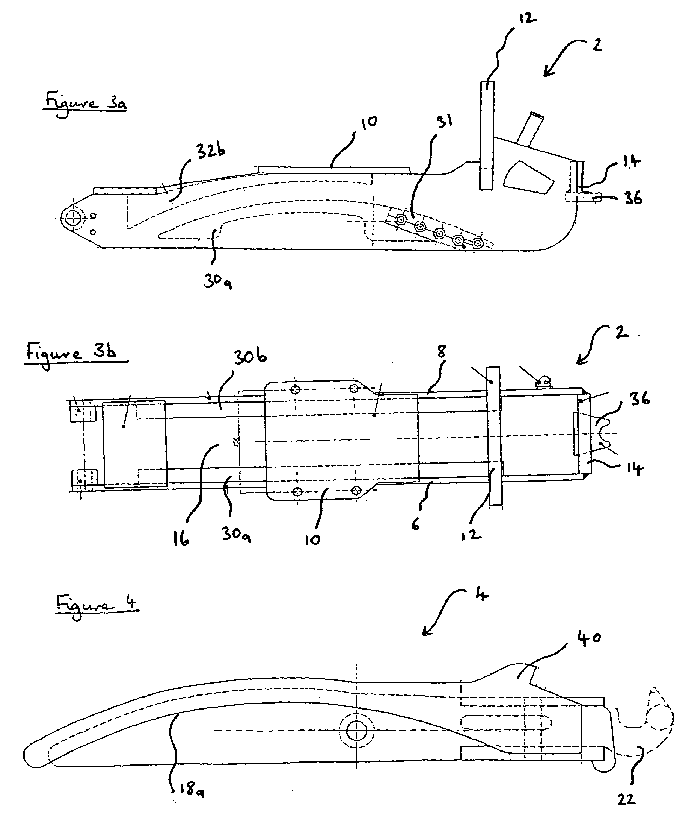

Referring first of all to Figures 1 to 4, a vehicle hitch 1 comprises a mounting frame 2, in this case a channel-shaped sub-frame (which is shown in isolation in Figures 3a and 3b), and a draw bar 4 (which is shown in isolation in Figure 4).

The mounting frame 2 is configured for attachment to a vehicle (not shown). Preferably, the mounting frame 2 is bolted to the vehicle, for example to the underside of the rear axle housing, and may be centrally located between the rear wheels, particularly where the vehicle is a tractor. Figures 1 to 4 show the mounting frame 2 in the general orientation in which it would be when attached to a vehicle.

As best seen in Figures 1 and 3b, the mounting frame 2 comprises a pair of generally parallel arms 6, 8 maintained in spaced-apart relation by a series of plates, 10, 12, 14. The arms 6, 8 define a channel 16 therebetween for receiving the draw bar 4 in a manner described in more detail below.

The draw bar 4 similarly comprises a pair of parallel draw arms 18, 20 (Figure 1). A hook 22 is attached at one end of the draw bar 4, between the draw arms 18, 20, to form a hitching point for the draw bar 4. Any other suitable hitching point may be used in place of the hook 22, for example a pin hitch, and the hitching point may be replaceable to allow interchange of different hitching points, as desired.

A linear drive device in the form of a double-acting hydraulic ram 24 is connected to the draw bar 4 and the mounting frame 2 by means of pinned connections 26, 28.

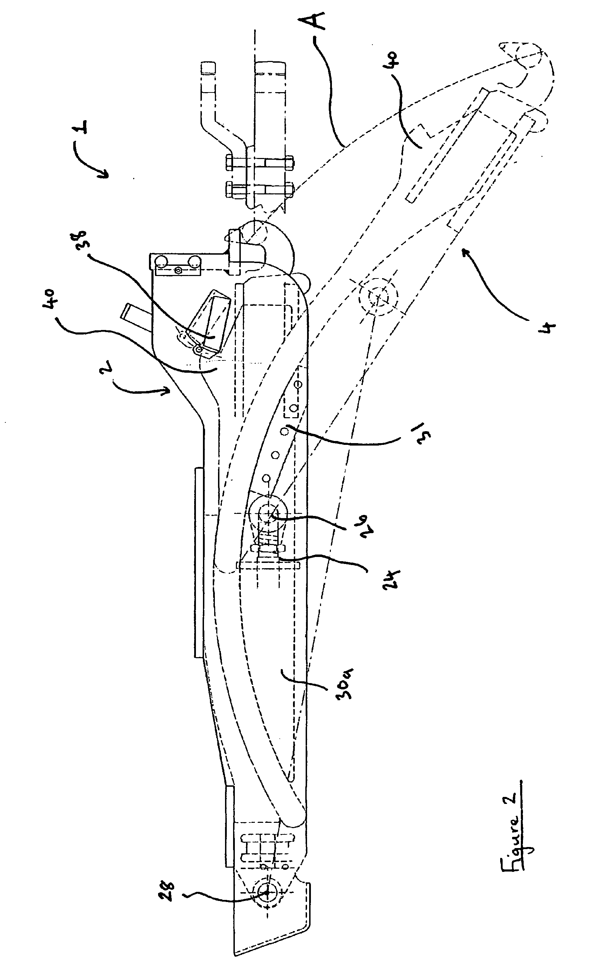

The hydraulic ram 24 acts as a drive unit between the mounting frame 2 and the draw bar 4 for driving the draw bar 4 between a raised position, shown in Figure 2, and a hitching position, shown in Figure 1 (and also in phantom in Figure 2).

The draw bar 4 is guided from the raised position to the hitching position not by a series of pivoting linkages, but by a sliding guide arrangement. The guide arrangement supports the draw bar 4 on the mounting frame 2 and further guides the end of the draw bar 4 having the hook 22 downwardly towards the ground as the draw bar 4 is driven outwardly by the hydraulic ram 24.

The guide arrangement comprises a curved support guide and an opposing curved counterbalancing guide.

The support guide is in the form of a lower pair of guide members 30a, 30b that have a curved bearing surface respectively slidably supporting corresponding curved guide elements 18a, 20a on the draw arms 18, 20 of the draw bar 4. The guide members 30a, 30b incorporate replaceable load-bearing guide inserts 31 at their outward end, which can be replaced when they become worn.

The counterbalancing guide is in the form of an upper pair of guide members (of which only one member 32b can be seen in Figure 3a) that have a curved bearing surface which slidably engage the upper surface of the curved guide elements 18a, 20a.

The curved bearing surfaces of the guide members in the embodiment of Figures 1 to 4 are arcuate (i.e. define substantially circular arcs when viewed in Figure 3) and concentric.

The guide members are fixed to the mounting frame 2 by any suitable means, or may be formed integrally with the mounting frame 2.

The outward end of the mounting frame 2 is provided with a locking plate 36 and a pair of interconnected pivoting locking catches 38 which can be moved from a locking position to a release position by means of a conventional linkage such as a rod or cable arrangement (not shown) operable from the cabin of a vehicle (not shown). Corresponding locking projections 40 are formed at the outward end of the draw arms 18,20.

Following attachment to a vehicle (not shown), the hitch 1 will typically be retained in the raised position shown in Figure 2 until such time as it is desired to perform a hitching operation. The draw bar 4 is retained in the raised position by means of the locking catches 38, which engage the corresponding locking projections 40 on the draw arms 18, 20. In this raised position, the draw bar is received in a retracted position in the channel 16 in the mounting frame 2. The draw bar 4 is substantially housed in the mounting frame i.e. the draw bar 4 does not project substantially below the mounting frame 2, thus maintaining the ground clearance between the (fixed) mounting frame 2 and the ground. The draw arms 18, 20 are retracted between the mounting arms 6, 8. In addition, the hydraulic ram 24 is aligned, or nested, in-between the draw arms 18, 20.

Where it is desired to hitch a trailer, the vehicle operator releases the locking catches 38 from the projections 40 and extends the hydraulic ram 24 to drive the draw bar 4 outwardly from the vehicle into the hitching position shown in Figure 1.

As the draw bar 4 is driven outwardly by the hydraulic ram 24, the arcuate guide elements 18a, 20a slide on the arcuate guide members 30a, 30b and the hydraulic ram 24 pivots about the pinned connection 28. The hook 22 is consequently slidably guided in a downward arc A (see Figure 2) towards the hitching position shown in Figure 1. At the same time, the upper guide member 32b on the mounting arm 6 and the corresponding upper guide member (not shown) on the mounting arm 8 act to slidably cantilever the draw bar 4 on the guide members 30a, 30b during movement of the draw bar 4 towards the hitching position, thus preventing pivoting or "tipping" movement of the draw bar 4 'over' the outward end of the guide members 30a, 30b.

Once the vehicle has been manoeuvred such that the hook 22 is located beneath the towing eye of the trailer, the draw bar 4 may then be retracted by means of the hydraulic ram 24, whereby the draw bar 4 engages the towing eye of the trailer as it moves back along an upward arc (corresponding to the downward arc A) and into the raised position shown in Figure 2. As the draw bar 4 moves into the raised position, the locking catches 38 re-engage the locking projections 40 and the hook 22 is brought into proximity with the locking plate 36 in order to prevent the towing eye of the trailer from "jumping" off the hook 22 whilst the trailer is being towed. The trailer is thus securely hitched to the vehicle until such time as the locking catches 38 are released.

It should be noted that, during guided movement of the hook 22, the hook 22 is effectively driven both outwardly as well as downwardly, thus tending to provide the operator with increased visibility, particularly in the case where the hitch 1 is attached to the back of an agricultural vehicle such as a tractor. The precise downward path of the hook 22 is predetermined by the geometry of the guide arrangement, in particular the geometry of the support guide and the counterbalancing guide, which may be varied appropriately. A downward arc such as the downward arc A is considered to be particularly advantageous because, when the draw bar is retracted to the raised position to engage the towing eye of a trailer, the vertical component of movement of the hook 22 will be greater than the horizontal component of movement so that the hook 22 will trace a predominantly vertical path initially, promoting a clean 'pick up' of the towing eye. It should also be noted here that the centre of curvature of the guides may be below ground.

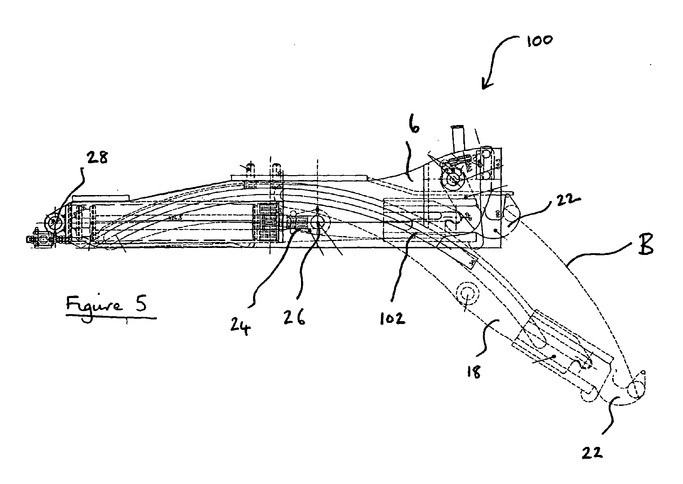

Figure 5 shows an alternative vehicle hitch 100. The same reference numerals have been retained for those features already described in relation to Figures 1 to 4.

The arrangement shown in Figure 5 differs from the previous arrangement shown in Figures 1 to 4 in that the support guide and the counterbalancing guide are defined as a pair of guide slots, rather than by separate guide members.

Thus, referring to Figure 5, a pair of arcuate slots 102 (of which only one slot is visible in Figure 5) is provided in the respective mounting arms 6, 8; the draw bar 4 is slidably mounted in the slots 102 by means of the arcuate guide elements 18a, 20a for sliding movement into a hitching position (shown in phantom in Figure 5) along a downward arc B. Here, the lower edges of the slots 102 define the support guide for slidably supporting the draw bar 4 on the mounting frame 2, whereas the upper edges of the slots 102 define the counterbalancing guide for slidably cantilevering the draw bar on the support guide.

The vehicle hitch 100 may be operated in essentially the same manner as the vehicle hitch 1 and the geometry of the guide slots 102 be varied as appropriate to alter the (predetermined) downward arc B.

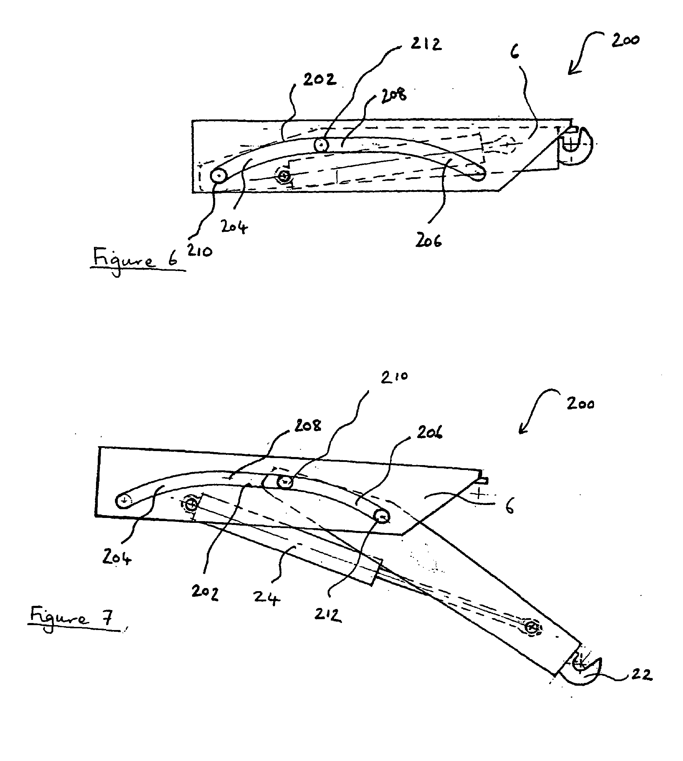

Figures 6 and 7 show a yet further alternative vehicle hitch 200, wherein the support guide and counterbalancing guide are each defined by guide slots in similar manner to the guide slots 102, but the guide slots are not arcuate.

Thus, referring to Figure 6, the support guide and the counterbalancing guide are defined by the lower and upper edges of a pair of guide slots 202 each incorporating a first upwardly curving section 204, a downwardly curving section 206 and a generally linear section 208 in between the curved sections 204, 206. The draw bar 4 is provided with associated first and second pairs of guide elements 210, 212 (only one member of each pair of guide elements 210, 212 can be seen in Figures 6 and 7) which are slidably received in the respective guide slots 202 for guiding the hook 22 downwardly as the draw bar 4 is driven outwardly into the hitching position. Again, the specific geometry of the guide slots 202 and guide elements 210, 212 may vary.

Although the embodiments shown in Figures 6 and 7 comprise a pair of guide slots, it is envisaged that in general terms the support guide and counterbalancing guide might be defined by any number of guide slots with the draw bar being slidably mounted in each slot and the slots together slidably guiding the draw bar downwardly towards the ground as the draw bar is driven outwardly into said hitching position.

In alternative embodiments (not shown), the guides may be defined by one or more channels in the mounting frame, rather than by guide slots.

Although the above embodiments show a guide arrangement for slidably guiding the hitching point downwardly as the draw bar is driven outwardly into the hitching position, the guide arrangement might equally be a rollable guide arrangement for rollalby guiding the hitching point. The guiding elements associated with the draw bar may comprise rollers.

In general, any suitable length may be employed for the counterbalancing guide and the support guide in a given application. In the case of the counterbalancing guide, it will be appreciated that as the draw bar is progressively cantilevered towards the hitching position, the "cantilever point" of maximum bearing load on the counterbalancing guide will move with the draw bar, and therefore the length of the counterbalancing guide will generally be dependent upon the degree of movement of the draw bar between the raised position and the hitching position.

In the illustrated embodiments, the vehicle hitch is powered by a double acting hydraulic ram. However, in certain circumstances a single acting hydraulic ram may be appropriate. Furthermore, the single hydraulic ram could be replaced by more than one hydraulic ram, or by any other suitable power source.

Although in the illustrated embodiments the hydraulic ram 24 is directly pivotally connected to the mounting frame 2 and the draw bar 4, the hydraulic ram may be pivotally connected to the draw bar and some other part of the vehicle such as the vehicle chassis. The hydraulic ram would still operate in the same way as in the illustrated embodiments and would still effectively be acting between the mounting frame and the draw bar.

A vehicle hitch in accordance with the present invention can be fitted to any part of a vehicle and could for example be fitted to the front of the vehicle or could even be adapted for fitting to a non-horizontal surface at the rear of a vehicle with appropriate adjustment of the geometry of its components.

It is envisaged that a sliding or rolling guide arrangement in accordance with the present invention is preferable to existing arrangements which guide the draw bar using relatively complicated pivoting linkages, and in particular that the number of manufacturing parts may be significantly reduced.

## Claims

1. A vehicle hitch (1) comprising a mounting frame (2) for attachment to a vehicle, a draw bar (4) having a hitching-point (22) towards one end, and a drive unit (24) acting between the mounting frame (2) and the draw bar (4) for driving the draw bar (4),
the mounting frame (2) having a sliding or rolling guide arrangement for slidably or rollably supporting the draw bar (4) on the mounting frame (2), the guide arrangement comprising a pair of sliding or rolling guides in the form of a support guide (30a, 30b) slidably or rollably supporting the draw bar (4) and an opposing counterbalancing guide (32b), **characterised in that** the drive unit (24) is capable of driving the draw bar (4) outwardly away from the vehicle into a hitching position and **in that** the counterbalancing guide (32b) slidably or rollably cantilevers the draw bar (4) on the support guide (30a, 30b) and is curved along its length such that the draw bar (4) and the hitching point (22) are guided in a downward arc towards the ground as the draw bar (4) is driven into said hitching position.

2. A vehicle hitch (1) according to claim 1, wherein the support guide (30a, 30b) is curved for guiding the draw bar (4) and the hitching point (22) in a downward arc towards the ground as the draw bar (4) is driven into said hitching position.

3. A vehicle hitch (1) according to claim 2, wherein the support guide (30a, 30b) and the counterbalancing guide (32b) are concentric substantially arcuate guides.

4. A vehicle hitch (1) according to claim 3, wherein the draw bar (4) has one or more associated arcuate guide elements (18a, 20a) that slidably engage the arcuate guides (30a, 30b, 32b).

5. A vehicle hitch (1) according to any preceding claim, wherein the drive unit (24) is a linear drive device pivotally connected to the draw bar (4) and further configured for pivotal connection to the mounting frame (2).

6. A vehicle hitch (1) according to claim 5, wherein the linear drive device (24) is directly pivotally connected to the mounting frame (2).

7. A vehicle hitch (1) according to claim 5 or 6, wherein the linear drive device (24) is double-acting for retracting the draw bar (4) from the hitching position into a retracted position.

8. A vehicle hitch (1) according to claim 7, wherein the draw bar (4) comprises a pair of parallel draw arms (18, 20) and the linear drive device (24) is aligned in-between the draw arms (18, 20).

9. A vehicle hitch (1) according to claim 7 or 8, wherein in said retracted position at least a portion of the draw bar (4) is housed within the mounting frame (2).

10. A vehicle hitch (1) according to claim 9, wherein in said retracted position the draw bar (4) is substantially housed in the mounting frame (2).

11. A vehicle hitch (1) according to claim 9 or 10, wherein the mounting frame (2) comprises a pair of mounting arms (6, 8) and the draw bar (4) is retractable between the mounting arms (6, 8).

12. A vehicle hitch (1) according to any of claims 1 to 11, wherein the support guide (30a, 30b) and counterbalancing guide (32b) are each defined by one or more guide slots or channels (102) on the mounting frame (2), the draw bar (4) being slidably mounted in each guide slot or channel (102).

13. A vehicle hitch (1) according to any of claims 1 to 12, wherein one or more of the guides (30a, 30b, 32b) comprises a load-bearing replaceable guide insert (31).

## Patentansprüche

1. Fahrzeug-Anhängerkupplung (1), umfassend einen Befestigungsrahmen (2) für die Anbringung an einem Fahrzeug, eine Zugstange (4), die einen Anhängepunkt (22) nahe an einem Ende aufweist, und eine Betätigungseinheit (24), die zwischen dem Befestigungsrahmen (2) und der Zugstange (4) wirkt und die Zugstange (4) bewegt,
wobei der Befestigungsrahmen (2) eine gleitende oder rollende Führungsanordnung aufweist, die die Zugstange (4) gleit- oder rollfähig an dem Befestigungsrahmen (2) hält, und die Führungsanordnung ein Paar gleitende oder rollende Führungen in Form einer Tragführung (30a, 30b) umfasst, die die Zugstange (4) gleit- oder rollfähig trägt, und eine gegenüberliegende Ausgleichsführung (32b), **dadurch gekennzeichnet, dass** die Betätigungseinheit (24) die Zugstange (4) nach außen weg von dem Fahrzeug in eine Anhängeposition bewegen kann, und dass die Ausgleichsführung (32b) die Zugstange (4) gleit- oder rollfähig einseitig auf der Tragführung (30a, 30b) hält und über ihre Erstreckung gekrümmt ist, so dass die Zugstange (4) und der Anhängepunkt (22) auf einem abwärts gerichteten Bogen hin zum Boden geführt werden, wenn die Zugstange (4) in die Anhängeposition bewegt wird.

2. Fahrzeug-Anhängerkupplung (1) nach Anspruch 1, wobei die Tragführung (30a, 30b) gebogen ist, damit die Zugstange (4) und der Anhängepunkt (22) auf einem abwärts gerichteten Bogen hin zum Boden geführt werden, wenn die Zugstange (4) in die Anhängeposition bewegt wird.

3. Fahrzeug-Anhängerkupplung (1) nach Anspruch 2, wobei die Tragführung (30a, 30b) und die Ausgleichsführung (32b) konzentrische und im Wesentlichen gebogenen Führungen sind.

4. Fahrzeug-Anhängerkupplung (1) nach Anspruch 3, wobei die Zugstange (4) ein oder mehrere zugehörige gebogene Führungselemente (18a, 20a) aufweist, die gleitend auf den gebogenen Führungen (30a, 30b, 32b) laufen.

5. Fahrzeug-Anhängerkupplung (1) nach irgendeinem vorhergehenden Anspruch, wobei die Betätigungseinheit (24) eine geradlinige Betätigungsvorrichtung ist, die schwenkbar mit der Zugstange (4) verbunden und zudem für eine schwenkbare Verbindung mit dem Befestigungsrahmen (2) konfiguriert ist.

6. Fahrzeug-Anhängerkupplung (1) nach Anspruch 5, wobei die geradlinige Betätigungsvorrichtung (24) direkt schwenkbar mit dem Befestigungsrahmen (2) verbunden ist.

7. Fahrzeug-Anhängerkupplung (1) nach Anspruch 5 oder 6, wobei die geradlinige Betätigungsvorrichtung (24) zum Zurückziehen der Zugstange (4) aus der Anhängeposition in die zurückgezogene Position doppelwirkend ist.

8. Fahrzeug-Anhängerkupplung (1) nach Anspruch 7, wobei die Zugstange (4) ein Paar parallele Zugarme (18, 20) umfasst und die geradlinige Betätigungsvorrichtung (24) zwischen den Zugarmen (18, 20) ausgerichtet ist.

9. Fahrzeug-Anhängerkupplung (1) nach Anspruch 7 oder 8, wobei in der zurückgezogenen Position zumindest ein Teil der Zugstange (4) in dem Befestigungsrahmen (2) aufgenommen ist.

10. Fahrzeug-Anhängerkupplung (1) nach Anspruch 9, wobei in der zurückgezogenen Position die Zugstange (4) im Wesentlichen in dem Befestigungsrahmen (2) aufgenommen ist.

11. Fahrzeug-Anhängerkupplung (1) nach Anspruch 9 oder 10, wobei der Befestigungsrahmen (2) ein Paar Befestigungsarme (6, 8) umfasst und die Zugstange (4) zwischen die Befestigungsarme (6, 8) eingezogen werden kann.

12. Fahrzeug-Anhängerkupplung (1) nach irgendeinem der Ansprüche 1 bis 11, wobei die Tragführung (30a, 30b) und die Ausgleichsführung (32b) jeweils durch einen oder mehrere Führungsschlitze oder Kanäle (102) auf dem Befestigungsrahmen (2) bestimmt sind, und die Zugstange (4) gleitfähig in jeden Führungsschlitz oder Kanal (102) eingebaut ist.

13. Fahrzeug-Anhängerkupplung (1) nach irgendeinem der Ansprüche 1 bis 12, wobei eine oder mehrere der Führungen (30a, 30b, 32b) einen lasttragenden ersetzbaren Führungseinsatz (31) enthalten.

## Revendications

1. Attelage (1) de véhicule comportant un châssis (2) de montage pour une fixation à un véhicule, une tige (4) de traction ayant un point (22) d'attelage vers une extrémité, et une unité (24) d'entraînement agissant entre le châssis (2) de montage et la tige (4) de traction pour entraîner la tige (4) de traction,
le châssis (2) de montage ayant un agencement de guidage roulant ou coulissant pour supporter de manière coulissante ou roulante la tige (4) de traction sur le châssis (2) de montage, l'agencement de guidage comportant une paire de guides roulants ou coulissants sous la forme d'un guide (30a, 30b) de support qui supporte en roulement ou en glissement la tige (4) de traction et un guide (32b) opposé de contrepoids, **caractérisé en ce que** l'unité (24) d'entraînement est capable d'entraîner la tige (4) de traction vers l'extérieur en s'éloignant du véhicule en une position d'attelage et **en ce que** le guide (32b) de contrepoids supporte en porte à faux de manière coulissante ou roulante la tige (4) de traction sur le guide (30a, 30b) de support et est incurvé dans sa longueur de sorte que la tige (4) de traction et le point (22) d'attelage soient guidés suivant un arc s'étendant vers le bas en direction du sol au fur à mesure que la tige (4) de traction est entraînée dans la position d'attelage.

2. Attelage (1) de véhicule suivant la revendication 1, dans lequel le guide (30a, 30b) de support est incurvé pour guider la tige (4) de traction et le point (22) d'attelage suivant un arc dirigé vers le bas en direction du sol au fur à mesure que la tige (4) de traction est entraînée dans la position d'attelage.

3. Attelage (1) de véhicule suivant la revendication 2, dans lequel le guide (30a, 30b) de support et le guide (32b) de contrepoids sont des guides en forme d'arcs sensiblement concentriques.

4. Attelage (1) de véhicule suivant la revendication 3, dans lequel la tige (4) de traction a un ou plusieurs éléments (18a, 20a) de guidage en forme d'arcs associés qui coopèrent de manière coulissante avec les guides (30a, 30b, 32b) en forme d'arcs.

5. Attelage (1) de véhicule suivant l'une quelconque des revendications précédentes, dans lequel l'unité (24) d'entraînement est un dispositif d'entraînement linéaire relié par pivot à la tige (4) de traction et est en outre configuré pour une connexion en pivot au châssis (2) de montage.

6. Attelage (1) de véhicule suivant la revendication 5, dans lequel le dispositif (24) d'entraînement linéaire est connecté par pivot directement au châssis (2) de montage.

7. Attelage (1) de véhicule suivant la revendication 5 ou 6, dans lequel le dispositif (24) d'entraînement linéaire est à double action pour rétracter la tige (4) de traction à partir de la position d'attelage dans une position rétractée.

8. Attelage (1) de véhicule suivant la revendication 7, dans lequel la tige (4) de traction comporte une paire de bras (18, 20) de traction parallèles et le dispositif (24) d'entraînement linéaire est aligné entre les bras (18, 20) de traction.

9. Attelage (1) de véhicule suivant la revendication 7 ou 8, dans lequel dans la position rétractée au moins une partie de la tige (4) de traction est reçue à l'intérieur du châssis (2) de montage.

10. Attelage (1) de véhicule suivant la revendication 9, dans lequel dans la position rétractée la tige (4) de traction est reçue sensiblement dans le châssis (2) de montage.

11. Attelage (1) de véhicule suivant la revendication 9 ou 10, dans lequel le châssis (2) de montage comporte une paire de bras (6, 8) de montage et la tige (4) de traction peut être rétractée entre les bras (6, 8) de montage.

12. Attelage (1) de véhicule suivant l'une quelconque des revendications 1 à 11, dans lequel le guide (30a, 30b) de support et le guide (32b) de contrepoids sont chacun définis par un ou plusieurs canaux ou fentes (102) de guidage sur le châssis (2) de montage, la tige (4) de traction étant montée coulissante dans chaque canal ou fente (102) de guidage.

13. Attelage (1) de véhicule suivant l'une quelconque des revendications 1 à 12, dans lequel un ou plusieurs des guides (30a, 30b, 32b) comporte(nt) un insert (31) de guidage remplaçable porteur de charge.
